# EUROPÄISCHE PATENTSCHRIFT

(11) **EP 1 079 999 B1**
(45) Veröffentlichungstag und Bekanntmachung des Hinweises auf die Patenterteilung: **24.08.2005**
(21) Anmeldenummer: 00920379.5
(22) Anmeldetag: 11.03.2000
(51) Int. Cl.: B60S 1/52

(54) **SCHEIBENWISCHER**
WINDSCREEN WIPER
ESSUIE-GLACE

(30) Priorität: 24.03.1999 DE 19913193
(43) Veröffentlichungstag der Anmeldung: 07.03.2001
(73) Patentinhaber: ROBERT BOSCH GMBH, 70442 Stuttgart (DE)
(72) Erfinder: ZIMMER, Joachim, D-77880 Sasbach (DE)
(86) Internationale Anmeldenummer: PCT/DE2000/000772
(87) Internationale Veröffentlichungsnummer: WO 2000/056584

(56) Entgegenhaltungen:
- DE-A- 3 639 537
- FR-A- 2 752 800
- GB-A- 2 223 424
- US-A- 3 432 876
- US-A- 5 865 376

## Beschreibung

Die Erfindung geht von einem Scheibenwischer nach dem Oberbegriff des Anspruchs 1 aus.

Bekannte Scheibenwischer besitzen einen Wischarm, der aus einem Befestigungsteil und einem über ein Abklappgelenk daran angelenkten Gelenkteil mit einer Wischstange aufgebaut ist. Ein hakenförmiges Ende der Wischstange greift in einen Einhängekasten eines Wischblatts, der von zwei Seitenwangen eines Mittelbügels gebildet wird, und umfaßt einen Gelenkbolzen. Das so gebildete Gelenk führt das Wischblatt während der Schwenkbewegung über die Fahrzeugscheibe. Das Wischblatt besitzt ein in der Regel mehrgliederiges Tragbügelsystem mit an dem Mittelbügel angelenkten, untergeordneten Bügeln, von denen zumindest einige mit Krallen an ihren Enden eine Wischleiste an deren Kopfleiste halten. Das mehrgliederige Tragbügelsystem und in die Kopfleiste eingelegte Federschienen ermöglichen, daß sich beim Wischen die Wischleiste mit einem gleichmäßigen Auflagedruck einer gebogenen Windschutzscheibe anpaßt. Zu diesem Zweck spannt eine Zugfeder das Abklappgelenk vor. Der Wischarm ist mit seinem Befestigungsteil auf einer Antriebswelle befestigt und wird bei der Wischbewegung von dieser angetrieben. Solche Scheibenwischer sind z.B. aus der DE 37 44 237 A1 bekannt. Bei vereinfachten Ausführungen können untergeordnete Bügel, auch Zwischenbügel und Krallenbügel genannt, entfallen. Im einfachsten Fall besitzt der Mittelbügel selbst Krallen, mit denen er die Wischleiste hält.

Scheibenwaschanlagen für Fahrzeuge werden in der Regel in Verbindung mit Scheibenwischern verwendet. Sie werden betätigt, wenn die Feuchtigkeit durch Niederschläge nicht ausreicht, um die Fahrzeugscheibe zu säubern. Sie beinhalten einen Wasserbehälter, Spritzdüsen und eine Pumpe, die Wasser, dem unter Umständen Reinigungs- und Antigefriermittel beigemischt sind, mit Druck aus dem Wasserbehälter über Wasserleitungen zu den Spritzdüsen fördert. In der Regel sind die Spritzdüsen an einem Teil einer Fahrzeugkarosserie befestigt, beispielsweise an einer Motorhaube, einem Fensterrahmen oder dgl. Um zu verhindern, daß die Spritzdüsen bei Temperaturen unter dem Gefrierpunkt einfrieren, sind in den Spritzdüsen Heizelemente integriert, die über außen liegende Stecker mit einer Stromversorgung verbunden sind. Die Heizelemente erfordern einen relativ hohen Fertigungsaufwand für die Spritzdüsen und einen großen Montageaufwand, um die elektrischen Leitungen zu verlegen und die Stecker zu kontaktieren. Ferner verdunsten die leicht flüchtigen Antigefriermittel schnell und durch die Rückstände setzen sich die Düsenöffnungen zu.

Es ist bereits bekannt, Spritzdüsen als zusätzliche Bauteile am Wischblatt zu befestigen und somit das Spritzwasser direkt mit kurzer Strahllänge auf den Wischbereich zu verteilen. Da das Spritzwasser auf einen Bereich in der Nähe des Wischblatts konzentriert ist und durch die Wischbewegung in kürzester Zeit wieder abgewischt wird, ist die Sicht durch das aufgebrachte Spritzwasser nur kurzzeitig behindert. Ein Nachteil solcher Systeme ist, daß Witterungseinflüsse, insbesondere Hagel und extreme Sonneneinwirkung die flexiblen Teile dieser Anordnung, die zum Überbrücken der gelenkigen Bereiche zwischen Wischarm und Wischblatt notwendig sind, stark beeinflussen. Ferner frieren die Spritzdüsen und Wasserleitungen, die dem Fahrtwind ausgesetzt sind, bei Temperaturen unter dem Gefrierpunkt schnell zu, wenn nicht genügend Antigefriermittel dem Wasser zugemischt ist. Die eingefrorenen Wasserleitungen und Spritzdüsen sind in der Regel nur mit großem Aufwand wieder aufzutauen.

In einer älteren Patentanmeldung, DE 198 15 171.3, ist ein Wischarm beschrieben, an dessen Gelenkteil, bzw. an einer mit dem Gelenkteil einstückig verbundenen Wischstange, Spritzdüsen angeordnet sind. Diese besitzen einen Düsenkörper, der in einer Ausbuchtung des Gelenkteils mit einer Öffnung für den Spritzstrahl untergebracht oder in einer seitlichen Halterung an der Wischstange nach unten vorstehend eingeklipst ist. Es können auch zwei Düsenkörper vorgesehen werden, die durch ein starres oder flexibles Verbindungsstück miteinander verbunden sind. Die Düsenkörper sind leicht austauschbar und gegenüber Umwelteinflüssen gut geschützt.

Zweckmäßigerweise hat die Spritzdüse ein nach außen hin öffnendes Rückschlagventil, das verhindert, daß die Wasserleitung sich bei längerer Nichtbenutzung der Waschanlage entleert oder Wasser beim Wischbetrieb ohne Waschfunktion austritt, insbesondere bei hohen Wischfrequenzen und/oder hubgesteuerten Wischarmen. Ferner wird verhindert, daß Waschwasser und Antigefriermittel im Bereich der Spritzdüse, vor allem bei einer beheizten Spritzdüse, verdunstet und sich die Spritzdüse durch Ablagerungen verengt oder zusetzt.

In die Scheibenwaschanlage ist eine Heizeinrichtung integriert, die drahtförmig durch eine Wasserzuführung geführt und im Düsenkörper als Heizwendel ausgebildet ist. Die Heizeinrichtung paßt nur für einen Typ von Scheibenwischern, so daß eine große Anzahl von verschiedenen Heizeinrichtungen vorrätig gehalten werden müssen. Im übrigen ergeben sich einfache Lösungen, indem die Düsenkörper einstückig miteinander verbunden und als Spritzgußteil aus Kunststoff hergestellt sind. Durch die am Wischarm verteilten Düsenkörper wird das Spritzwasser gut über den Wischbereich verteilt, insbesondere wenn ein Spritzstrahl in einen unteren Bereich direkt vor das Wischblatt gelenkt wird. Da sich durch die Anordnung kurze Strahllängen ergeben, kann der Fahrtwind selbst bei höherer Fahrgeschwindigkeit die Spritzwasserverteilung nur wenig beeinflussen.

Aus der gattungsgemässen FR-A-2 752 800 ist ein Scheibenwischer mit einem Wischarm bekannt, der über eine Antriebswelle angetrieben wird und an dem ein Wischblatt angelenkt ist, wobei mindestens eine Spritzdüse an einem schwenkbaren Teil angeordnet ist. Das Gehäuse der Spritzdüse ist lösbar über eine Wasserleitung mit einer Wasserpumpe verbunden. In dem Gehäuse oder in einem damit verbundenen Düsenkörper ist ein sich an die Wasserleitung anschließender, durchgehender Wasserkanal vorgesehen, von dem ein Verbindungskanal abzweigt, der zu einem zum Wasserkanal annähernd parallelen Spritzkanal mit einer Düsenöffnung führt, wobei der Wasserkanal an seinem Ende, das der Verbindung mit der Wasserleitung gegenüberliegt, verschlossen ist. Die Spritzdüse, die aus Kunststoff hergestellt ist, wird mittels angeformter Befestigungsmittel an einer Wischstange des Wischarms gehalten. Eine ähnliche Spritzdüse zeigt die US-A-5 865 376. Hierbei ist die Spritzdüse aus mehreren Teilen zusammengesetzt.

### Vorteile der Erfindung

Nach der Erfindung ist mindestens eine Spritzdüse an einem Halteelement angeordnet. Das Halteelement kann ein Wischarm und/oder eine Wischstange sein. Die Spritzdüse besitzt ein Gehäuse, das einen Wasserkanal enthält, von dem ein Verbindungskanal abzweigt. Der Wasserkanal kann auch von einem Düsenkörper gebildet werden, der in das Gehäuse eingesetzt ist. Vom Wasserkanal zweigt ein Verbindungskanal ab, der zu einem zum Wasserkanal annähernd parallelen Spritzkanal führt und an seinem freien Ende verschlossen ist. Eine solche Anordnung läßt mit wenigen Abänderungen zahlreiche Varianten zu, mit denen die Anforderungen für verschiedene Einbausituationen an einem Wischarm abgedeckt werden können. Dabei ist die Spritzdüse aus mehreren Funktionseinheiten aufgebaut, die nach Bedarf zusammengesetzt werden können.

Bei einer Ausgestaltung der Erfindung ist das Gehäuse in einer Öffnung des Halteelements gehalten, z.B. eingeklipst. Ein Düsenkörper mit einem den Spritzkanal umschließenden Stutzen wird von außen in die durch das Halteelement ragende Öffnung des Verbindungskanals des Gehäuses eingesteckt. Der äußere Teil des Düsenkörpers weist eine Düsenöffnung auf und deckt das Gehäuse und die Öffnung des Halteelements ab. Dadurch sind die Bauteile schnell lösbar miteinander verbunden und können auch einzeln einfach ausgetauscht werden. Die Spritzdüse ragt nur mit dem äußeren Teil des Düsenkörpers aus dem Halteelement heraus und der Teil paßt sich harmonisch der Kontur des Halteelements an, so daß es optisch sowie strömungstechnisch nicht stört und keine Geräusche verursacht.

Für Wischer mit größeren Wischblattlängen werden mehrere Spritzdüsen benötigt. Zu diesem Zweck sieht eine Variante der Erfindung für die in Strömungsrichtung vorne liegenden Spritzdüsen einen Wasserkanal vor, der an seinem freien Ende ein Anschlußstück zu einer weiterführenden Wasserleitung aufweist, die zu einer weiteren Spritzdüse führt. Anstelle des Anschlußstücks ist in der letzten Spritzdüse eine Verschlußkappe eingeklipst, die den durchgehenden Wasserkanal verschließt. Um eine der Spritzdüsen und die Wasserleitungen an die jeweiligen Halteelemente gut anpassen zu können, werden anstelle angeformter gerader oder gekröpfter Anschlußstücke eingesteckte vorgesehen, so daß das Gehäuse und/oder der Düsenkörper für verschiedene Anschlußteile oder Abschlußteile gleich sind. Die verbindende Wasserleitung mit den Spritzdüsen wird durch eine gezielte Auswahl der Bauteile optimal dem gegebenen Bauraum angepaßt.
Die optische und strömungstechnische Wirkung hängt im wesentlichen von dem Maß ab, mit dem die Spritzdüse aus dem Halteelement herausragt. Es ist daher zweckmäßig, daß der Düsenkörper mit der Mündung des Spritzkanals soweit aus einer Öffnung eines Halteelements ragt, daß die dem Halteelement zugewandte Innenwand des Spritzkanals oder der Düsenöffnung bündig mit der Außenwand des Halteelements abschließt. Dadurch kann der Spritzstrahl trotz einer flachen Bauweise weitgehend parallel zu dem Halteelement, dem Wischarm, ausgerichtet werden. Eine besonders flache Bauweise erreicht man, wenn die Düsenöffnung unmittelbar in den Düsenkörper oder eine Düsenkappe eingeformt und integraler Bestandteil des Düsenkanals ist. Die Düsenkappe sitzt zweckmäßigerweise lösbar auf einem Stutzen des Düsenkörpers. Sie kann bei Verschleiß oder Beschädigung leicht ausgetauscht werden oder durch eine Düsenkappe mit einer anderen Spritzstrahlgeometrie ersetzt werden. Wenn die Düsenkappe auf einem Kugelsitz des Stutzens gelagert ist, kann der Spritzstrahl noch nach dem Einbau der Spritzdüse justiert werden.

In der Regel ist der Spritzkanal vor der Düsenöffnung weiter als die Düsenöffnung selbst. Es ist daher zweckmäßig, die Düsenöffnung an den äußeren Rand des Spritzkanal zu legen, um den Überstand der Spritzdüse zum Halteelement zu verringern. Dies ist besonders einfach, wenn die Düsenöffnung in den Düsenkörper oder die Düsenkappe integriert ist. Um das Waschwasser strömungsgünstig zur Düsenöffnung zu leiten, ist es vorteilhaft, daß die Düsenkappe einen Leitkörper aufweist, der zur Düsenöffnung führt und im montierten Zustand der Düsenkappe in den Spritzkanal eingreift.
Die Düsenöffnung ist nach der Erfindung im oberen Bereich des Halteelements angeordnet, damit wird erreicht, daß der Auftreffwinkel des Spritzstrahls möglichst steil ist. Bei einem steilen Auftreffwinkel verändert sich die Auftreffläche weniger in Abhängigkeit von Toleranzen, die bezüglich der Strahlrichtung auftreten können. In der Regel genügt eine Düsenöffnung. Durch mehrere vertikal übereinander angeordnete Düsenöffnungen läßt sich die benetzbare Auftreffläche vergrößern ohne daß die Spritzdüse weiter aus dem Halteelement herausragt.

Der Düsenkörper der Spritzdüse ist aus Kunststoff hergestellt und in das Gehäuse eingeklipst, so daß dessen durchgehender Wasserkanal mit der Wasserleitung verbunden ist. Vom Wasserkanal zweigt ein Verbindungskanal ab, der zu einem Spritzkanal mit einer Düsenöffnung führt. Beim Druckaufbau der Pumpe wird Wasser aus dem Vorratsbehälter durch die Leitungen des Systems bis zur Düsenöffnung gedrückt und tritt dann durch die Düsenöffnung ins Freie. Im drucklosen Zustand läuft ein Teil des Wassers nach, so daß die Leitungen teilweise entleert sind. Um das Leerlaufen der Leitungen zu verhindern, sieht eine Variante der Erfindung ein Rückschlagventil vor. Dabei verschließt eine Membran im drucklosen Zustand den Verbindungskanal. Dieser kann nahe an der Düsenöffnung liegen, so daß nur ein kleines Wasservolumen zwischen der Membran und der Düsenöffnung gelagert ist und unkontrolliert ausfließen oder verdunsten kann. Die Membran ist als eine gummielastische Schlauchmembran ausgebildet, die an ihren Enden Wülste aufweist. Diese sind in Ringnuten des Düsenkörpers eingebettet. Beim Einströmen des Wassers durch den Verbindungskanal wird ein Ringraum am Umfang des Düsenkörpers gefüllt und die Membran aufgeweitet. Dabei stützt sich die Membran außen am Gehäuse ab und gibt die Mündungsöffnungen des Verbindungskanals und des Spritzkanals am Umfang des Düsenkörpers frei. Um zum Öffnen nur den Umgebungsdruck und die Vorspannung der Membran überwinden zu müssen, befindet sich am Düsengehäuse eine Entlüftungsbohrung. Der Öffnungsdruck der Membran ist gering, so daß das System mit relativ geringer Pumpenleistung betrieben werden kann.

Der Düsenkörper kann leicht aus Kunststoff durch Spritzgießen hergestellt werden. Sein Außendurchmesser verkleinert sich zwischen den Ringnuten an beiden Enden, so daß die Schlauchmembran an ihren Enden dichtend zwischen dem Gehäuse und dem Düsenkörper gehalten ist, aber im Bereich des Ringraums am Umfang des Düsenkörpers genügend radialen Spielraum hat, um ausreichend große Strömungsquerschnitte freigeben zu können. Dabei bleibt die äußere, glatte, zylindrische oder konische Kontur erhalten.

Damit die Spritzdüsen auch für den Winterbetrieb tauglich sind, werden sie beheizt. Die Heizleitung führt vorteilhafterweise durch die gemeinsame Wasserleitung und durch die Wasserkanäle. Die Membranventile schließen den Wasserraum nach außen ab und verhindern somit, daß das erwärmte Wasser verdunstet und die Spritzdüsen verkalken. Ebenfalls wird mit Hilfe der Membranventile das Wasser während der Ruheintervalle im System zurückgehalten. So kann das Waschwasser bei getaktetem Sprühen im richtigen Moment vor das Wischblatt gespritzt werden. Um die Sicht des Fahrers nicht zu behindern, spritzt das Wasser während der Aufwärtsbewegung der Wischarme, jedoch darf beim Abwärtswischen kein Wasser nachtropfen.

Ein geringeres Bauvolumen der verbundenen Spritzdüsen ergibt sich dadurch, daß Wasser- und Energieversorgung in einem Element integriert sind und ein elektrisches Kontaktieren der Heizung und der Düsen entfällt. Es wird eine gute Energieübertragung erreicht, da ein geringer Abstand zwischen dem Wasserkanal und der Düsenöffnung besteht. Die Herstellung des Düsenkörpers aus Kunststoff ergibt eine Wärmeisolierung nach außen, so daß sich die Wärmeabgabe insbesondere auf die Düsenöffnung und das Wasser konzentriert. Dies führt zu einem geringeren Energieverbrauch.

Das erwärmte Wasser verbessert die Reinigungswirkung, so daß der Wasserverbrauch und besonders der Verbrauch von umweltschädlichen Zusätzen verringert werden kann.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Längsschnitt durch eine Spritzdüse,
- Fig. 2: eine schematische Ansicht einer Anordnung einer Spritzdüse an einem Halteelement,
- Fig. 3: einen Schnitt entsprechend der Linie III-III in Fig. 2,
- Fig. 4: eine Variante zu Fig. 3,
- Fig. 5: eine Variante zu Fig. 2 mit zwei in einer Ebene parallel zur äußeren Begrenzung des Halteelements angeordneten Düsenöffnungen,
- Fig. 6: einen Schnitt entsprechend der Linie VI-VI in Fig. 5,
- Fig. 7: einen Längsschnitt durch eine Spritzdüse mit einer einstellbaren Düsenöffnung und einer Schlauchmembran sowie einem eingesetzten Anschlußstück,
- Fig. 8: einen Längsschnitt durch eine Spritzdüse mit Düsenkappe und einer Schlauchmembran sowie einem aufgesetzten Endstück,
- Fig. 9-10: einen Längsschnitt durch Varianten der Düsenkappe,
- Fig. 11: eine Variante zu Fig. 1 mit einer Schlauchmembran und einem Anschlußstück zu einem weiterführenden Wasserkanal und

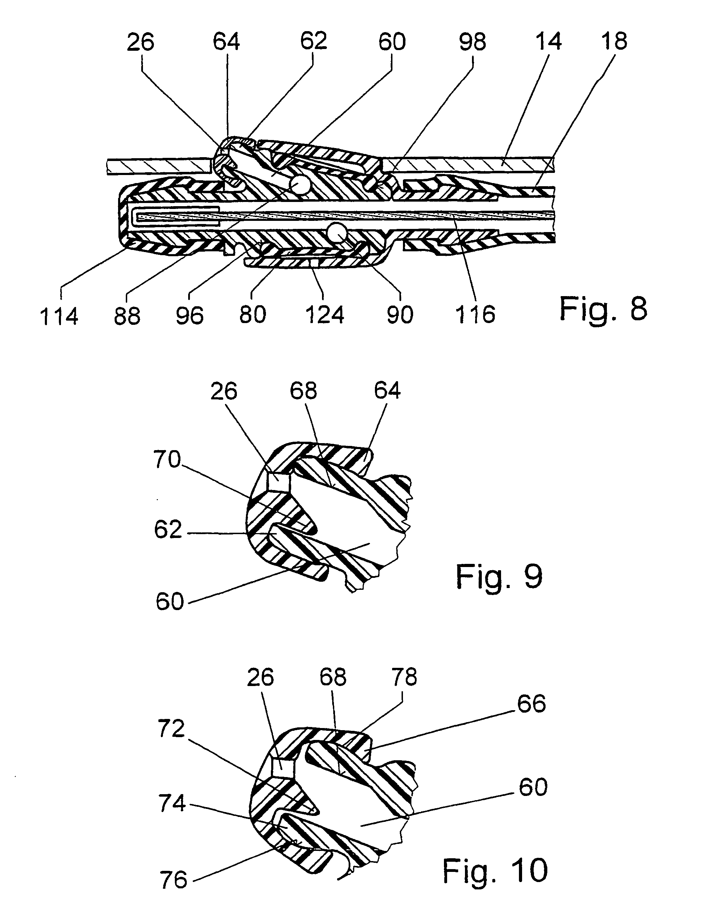

- Fig. 10: einen Längsschnitt durch eine Anordnung mit mehreren Spritzdüsen.

### Beschreibung der Ausführungsbeispiele

Eine Spritzdüse 10 ist an einem schwenkbaren Teil eines nicht näher dargestellten Wischarms befestigt. Der schwenkbare Teil ist im folgenden als Halteelement 14 bezeichnet und kann ein Befestigungsteil, ein Gelenkteil und/oder eine mit dem Gelenkteil verbundene Wischstange oder ein Teil eines Wischblatts sein.

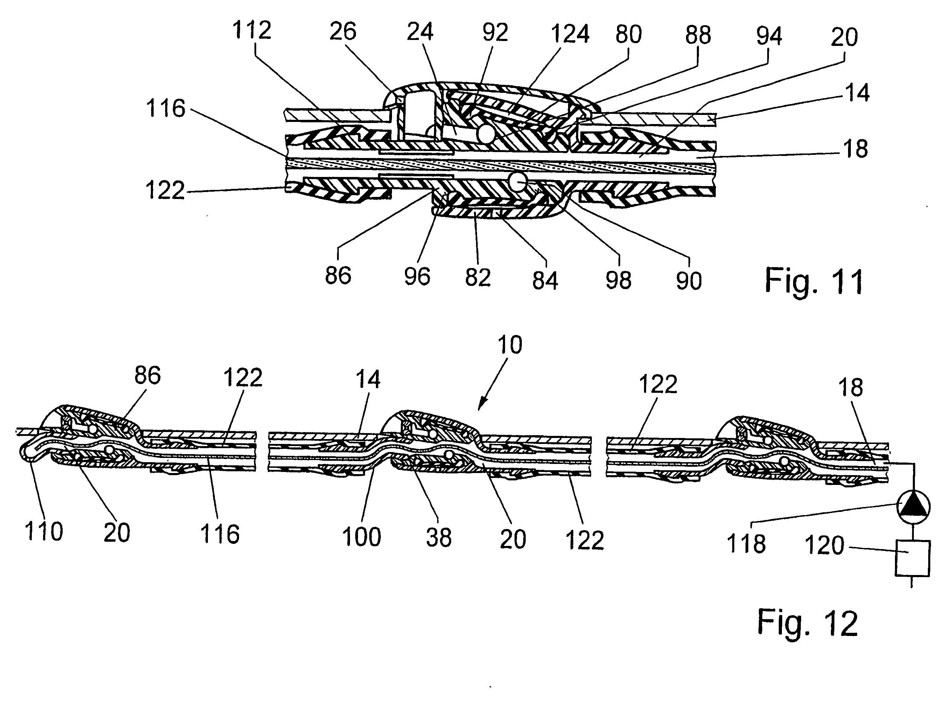

Die Spritzdüse 10 besteht aus einem Gehäuse 16, das lösbar mittels eines Anschlußstücks 32 über eine Wasserleitung 18 mit einer Wasserpumpe 118 verbunden ist, die aus einem Vorratsbehälter 120 Waschwasser zur Spritzdüse 10 fördert (Fig. 12). Das Gehäuse 16 ist aus Kunststoff hergestellt und umgibt einen Wasserkanal 20, der an seinem freien Ende 38 verschlossen ist und von dem ein Verbindungskanal 22 abzweigt. Der Verbindungskanal 22 führt zu einem Spritzkanal 24 mit einer Düsenöffnung 26. Das Gehäuse 16 ist in eine Öffnung 34 des Halteelements 14 eingeklipst und wird mittels angeformter Nasen 40 und 42 fixiert und gehalten. Ein Düsenkörper 12 weist einen den Spritzkanal 24 umschließenden Stutzen 30 auf, mit dem er über eine Steckverbindung in eine Öffnung 36 des Gehäuses 16 eingreift. Der äußere Teil 44 des Düsenkörpers 12 besitzt mindestens eine Düsenöffnung 26 und deckt die Öffnung 34 im Halteelement 14 ab. Der Düsenkörper 12 ragt mit der Mündung 28 des Spritzkanals 24 soweit aus der Öffnung 34 des Halteelements 14, daß die dem Halteelement 14 zugewandte Innenwand des Spritzkanals 24 oder der Düsenöffnung 26 bündig mit der Außenwand 46 des Halteelements 14 abschließt.

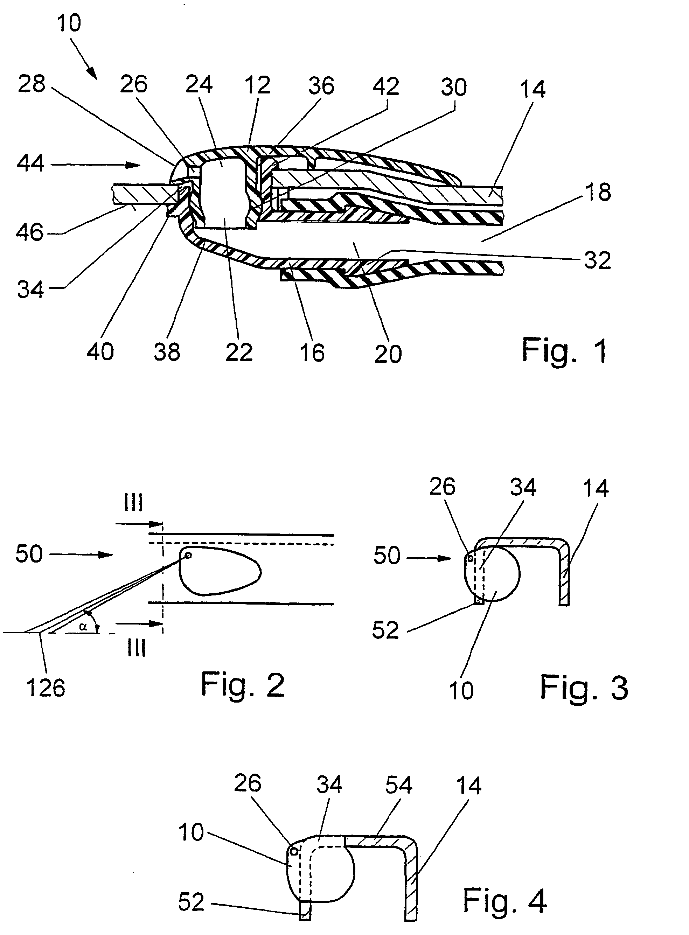

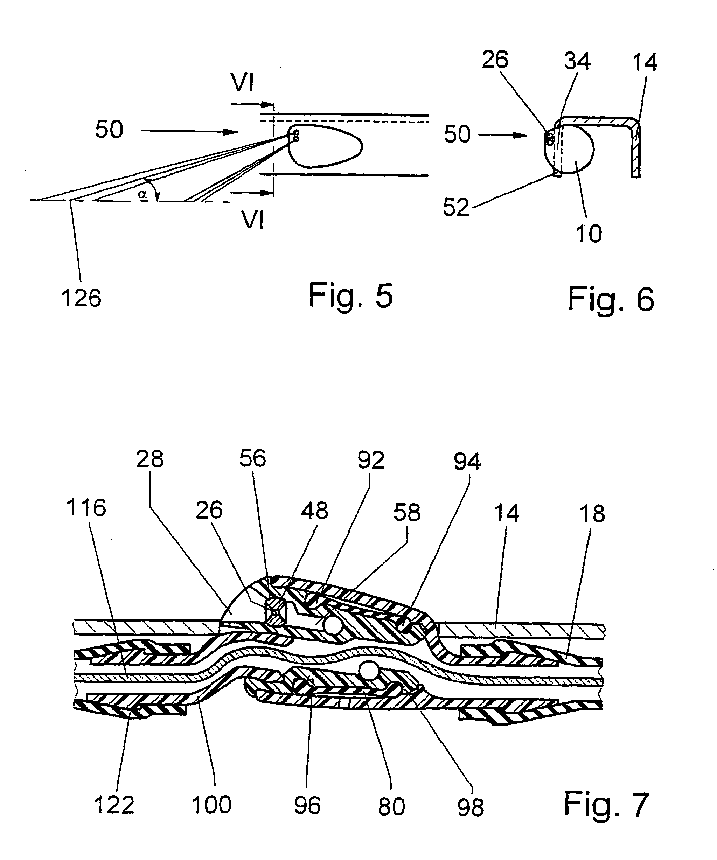

Fig. 3 zeigt schematisch, wie die Spritzdüse 10 in der Öffnung 34 eines Schenkels 52 des Halteelements 14 angeordnet ist. Die Düsenöffnung 26 befindet sich im oberen Bereich 50 des Halteelements 14. Nach einer weiteren Variante erstreckt sich die Öffnung 34 über einen Teil des Schenkels 52 und der Deckwand 54 (Fig. 4). Wenn mehrere Düsenöffnungen 26 vorhanden sind, können diese im oberen Bereich 50 vertikal übereinander angeordnet werden (Fig. 5 und 6). Eine Anordnung der Düsenöffnungen 26 im oberen Bereich 50 des Halteelements 14 bewirkt, daß ein steiler Auftreffwinkel α des Wasserstrahls entsteht, der eine gute Reinigungswirkung hat. Ferner verlagert sich der Auftreffpunkt nur geringfügig in Abhängigkeit von Fertigungstoleranzen und Verschleiß.

Fig. 1 zeigt eine in den Düsenkörper 12 integrierte Düsenöffnung 26, die keine Einstellung des Spritzstrahls ermöglicht. Um den Spritzstrahl einstellen zu können, sieht eine Variante eine Kugel 48 vor, die eine Düsenöffnung 26 besitzt und in einem Kugelsitz 56 des Spritzkanals 58 eingepreßt ist (Fig. 7). Eine weitere Variante zeigt einen Spritzkanal 60 in einem angeformten Stutzen 62, auf den eine Düsenkappe 64 mit einer Düsenöffnung 26 sitzt (Fig. 8). Fig. 7 zeigt die Düsenkappe 64 vergrößert, die auf den Stutzen 62 aufgeklipst ist. Die Düsenöffnung 26 ist im Bereich der äußeren Innenwand 68 des Spritzkanals 60 angeordnet. Weiterhin besitzt die Düsenkappe 64 auf der dem Düsenkörper 86 zugewandten Seite einen leitkörper 70, der auf die Düsenöffnung 26 zuläuft und in den erweiterten Spritzkanal 60 eingreift. Der Leitkörper 70 bewirkt eine strömungsgünstige Wasserführung vor der Düsenöffnung 26.

Eine solche Ausführung der Düsenkappe 64 ermöglicht keine Einstellung der Düsenöffnung 26. Um eine Einstellung vornehmen zu können, sieht eine Variante der Erfindung eine Düsenkappe 66 vor, die mit ihrer kugelförmigen Innenfläche 76 auf einem Kugelsitz 78 des angeformten Stutzens 74 sitzt (Fig. 10).

In Fig. 1 ist eine einfache Bauform der Spritzdüse 10 dargestellt, die kein Rückschlagventil besitzt. Fig. 11 zeigt eine Variante der Spritzdüse 10 mit einer Schlauchmembran 80, die als Rückschlagventil wirkt, die in einem Ringraum 124 untergebracht ist und an ihren Enden mit Wülsten 92, 94 in Ringnuten 96, 98 des Düsenkörpers 86 dichtend eingreift. Durch Aufbringen eines Pumpendrucks strömt Wasser von einer Wasserleitung 18 durch einen Wasserkanal 20 in den Verbindungskanal 22, der in den Ringraum 124 innerhalb der Schlauchmembran 80 mit einer Mündungsöffnung 90 mündet, und weitet die Schlauchmembran 80 auf. Das Wasser gelangt in einen Raum zwischen der Schlauchmembran 80 und dem Düsenkörper 86 und von dort in den Spritzkanal 24, der ebenfalls in diesem Raum eine Mündungsöffnung 88 besitzt, die von der Schlauchmembran 80 gesteuert wird. Wenn die Schlauchmembran 80 vom Düsenkörper 86 abhebt, legt sie sich nach einem bestimmten Öffnungsweg an dem Gehäuse 82 an. Dadurch wird vermieden, daß sich die Schlauchmembran 80 bei höheren Spritzdrücken überdehnt. Im Bereich der Schlauchmembran 80 ist im Gehäuse 82 mindestens eine Entlüftungsbohrung 84 vorgesehen, damit die Luft zwischen der Schlauchmembran 80 und dem Gehäuse 82 aus dem Ringraum 124 beim Öffnen entweichen kann. Im geschlossenen Zustand liegt die Schlauchmembran 80 unter Eigenspannung am Düsenkörper 86 an. Sie schließt die Mündungsöffnungen 88 und 90 und trennt somit den Wasserkanal 20 vom Spritzkanal 24. Die Schlauchmembran 80 besteht aus einem Elastomer. Um der Schlauchmembran 80 genügend Bewegungsspielraum zu geben, ohne den Bauraum zu vergrößern und von einer regelmäßigen Außenkontur abzuweichen, ist der Außendurchmesser des Düsenkörpers 86 im Bereich zwischen den Ringnuten 96 und 98 verkleinert. Ferner vergrößert sich der mittlere Außendurchmesser des Düsenkörpers 86 zur Düsenöffnung 26 hin. Dadurch kann Material und Gewicht eingespart und der zur Verfügung stehende Bauraum optimal genutzt werden.

Scheibenwischer mit größeren Wischblattlängen benötigen mehrere Spritzdüsen 10. Zu diesem Zweck sieht eine Variante der Erfindung einen Wasserkanal 20 vor, der an seinem freien Ende 38 ein Anschlußstück 100 zu einer weiterführenden Wasserleitung 122 aufweist. Die Wasserleitung 18 verbindet alle Spritzdüsen 10 miteinander (Fig. 12). Anstelle des Anschlußstücks 100 ist in der letzten Spritzdüse 10 eine Verschlußkappe 110 eingeklipst, die den durchgehenden Wasserkanal 20 verschließt. Um eine möglichst gute Anpassung der Spritzdüsen 10 und der Teile der Wasserleitung 18 an die jeweiligen Halteelemente 14 zu erreichen, sind mehrere Varianten von Anschlußstücken 100, 112 und von Verschlußkappen 110, 114 vorgesehen. Fig. 12 zeigt ein gekröpftes, eingestecktes Anschlußstück 100 und eine gekröpfte, eingesteckte Verschlußkappe 110. Fig. 11 zeigt ein gerades, angeformtes Anschlußstück 112 und Fig. 8 zeigt eine gerade, aufgesteckte Verschlußkappe 114. Das gesamte System, bestehend aus der verbindenden Wasserleitung 122 und den Spritzdüsen 10, kann somit durch eine gezielte Auswahl der Bauteile optimal angepaßt werden.

Eine Heizleitung 116 führt durch die Wasserleitungen 18, 122 und die Wasserkanäle 20 der Spritzdüsen 10. Der Düsenkörper 86, der zweckmäßigerweise einstückig ausgebildet ist, ist als Spritzgußteil aus Kunststoff hergestellt. Dadurch ist das Wasser im Düsenkörper 86 wärmeisoliert, so daß auch bei niedrigen Temperaturen nur eine geringe Heizleistung erforderlich ist. Eine solche innen liegende Heizung und eine günstige Auswahl der eingesetzten Werkstoffe für die verwendeten Bauteile ergeben ein kleines Bauvolumen, Energie- und Kosteneinsparungen.

## Patentansprüche

1. Scheibenwischer mit einem Wischarm, der über eine Antriebswelle angetrieben wird und an dem ein Wischblatt angelenkt ist, wobei an einem schwenkbaren Teil (14) mindestens eine aus mehreren Teilen zusammengesetzte Spritzdüse (10) angeordnet ist, deren Gehäuse (16, 82) oder ein damit verbundener Düsenkörper (12, 86) einen durchgehenden Wasserkanal (20) aufweist, von dem ein Verbindungskanal (22) zu einem zum Wasserkanal (20) annähernd parallelen Spritzkanal (24, 58, 60) mit einer Düsenöffnung (26) abzweigt und der lösbar über eine Wasserleitung (18) mit einer Wasserpumpe (118) verbunden ist, **dadurch gekennzeichnet, dass** an dem Ende (38) des Wasserkanals (20), das der Wasserleitung (18) abgewandt ist, ein Anschlußstück (100) zu einer weiterführenden Wasserleitung (122) oder eine Verschlußkappe (110) vorgesehen ist.

2. Scheibenwischer nach dem Oberbegriff von Anspruch 1, wobei das Gehäuse (16) in einer Öffnung (34) des als Halteelement dienenden schwenkbaren Teils (14) gehalten ist und wobei der äußere Teil (44) des Düsenkörpers (12) eine Düsenöffnung (26) aufweist und die Öffnung (34) des Halteelements (14) abdeckt, **dadurch gekennzeichnet, dass** der Düsenkörper (12) einen den Verbindungskanal (22) umschließenden Stutzen (30) aufweist, mit dem er über eine Steckverbindung in eine Öffnung (36) des Gehäuses (16) eingreift.

3. Scheibenwischer nach Anspruch 1 oder 2, **dadurch gekennzeichnet, dass** das Gehäuse (16, 82) und/oder der Düsenkörper (12, 86) aus Kunststoff ist und der Düsenkörper (12, 86) in das Gehäuse (16, 82) eingeklipst ist.

4. Scheibenwischer nach Anspruch 1, **dadurch gekennzeichnet, dass** das Anschlußstück (100) gekröpft ist.

5. Scheibenwischer nach einem der vorhergehenden Ansprüche, **dadurch gekennzeichnet, dass** der Düsenkörper (12, 82) mit der Mündung (28) des Spritzkanals (24, 58, 60) so aus einer Öffnung (34) des Halteelements (14) herausragt, dass die dem Halteelement (14) zugewandte Innenwand des Spritzkanals (24, 58, 60) oder der Düsenöffnung (26) bündig mit der Außenwand (46) des Halteelements (14) abschließt.

6. Scheibenwischer nach einem der vorhergehenden Ansprüche, **dadurch gekennzeichnet, dass** die Düsenöffnungen (26) im oberen Bereich (50) des Halteelements (14) angeordnet sind.

7. Scheibenwischer nach einem der vorhergehenden Ansprüche, **dadurch gekennzeichnet, dass** mehrere Düsenöffnungen (26) vertikal übereinander angeordnet sind.

8. Scheibenwischer nach Anspruch 7, **dadurch gekennzeichnet, dass** das Halteelement (14) ein u-förmiges Querschnittprofil aufweist und die Öffnung (34) sich über einen Teil eines Schenkels (52) und einer Deckwand (54) erstreckt.

9. Scheibenwischer nach einem der vorhergehenden Ansprüche, **dadurch gekennzeichnet, dass** eine Kugel (48) mit der Düsenöffnung (26) in einen Kugelsitz (56) des Spritzkanals (58) eingepreßt ist.

10. Scheibenwischer nach einem der vorhergehenden Ansprüche, **dadurch gekennzeichnet, dass** die Mündung des Spritzkanals (60) von einem am Düsenkörper (86) angeformten Stutzen (62) gebildet ist, auf den eine Düsenkappe (64) mit einer Düsenöffnung (26) gesetzt ist.

11. Scheibenwischer nach Anspruch 10, **dadurch gekennzeichnet, dass** die Düsenkappe (66) aus Kunststoff besteht und auf einen Kugelsitz (78) des Stutzens (74) aufgeklipst ist.

12. Scheibenwischer nach einem der Ansprüche 10 oder 11, **dadurch gekennzeichnet, dass** die Düsenöffnung (26) im Bereich der äußeren Innenwand (68) der Mündung des Spritzkanals (60) angeordnet ist.

13. Scheibenwischer nach Anspruch 13, **dadurch gekennzeichnet, dass** die Düsenkappe (64, 66) auf der dem Düsenkörper (12) zugewandten Seite mit einem Leitkörper (70, 72), der auf die Düsenöffnung (26) zuläuft, in den erweiterten Spritzkanal (60) eingreift.

14. Scheibenwischer nach einem der vorhergehenden Ansprüche, **dadurch gekennzeichnet, dass** der Verbindungskanal (22) und der Spritzkanal (24, 58, 60) in einen Ringraum (124) am Umfang des Düsenkörpers (86) münden und ihre Mündungsöffnungen (88, 90) von einer Membran (80) abgedeckt sind.

15. Scheibenwischer nach Anspruch 14, **dadurch gekennzeichnet, dass** die Membran eine gummielastische Schlauchmembran (80) ist und an ihren Enden Wülste (92, 94) aufweist, die in Ringnuten (96, 98) des Düsenkörpers (86) eingebettet sind.

16. Scheibenwischer nach einem der Ansprüche 14 oder 15, **dadurch gekennzeichnet, dass** eine Entlüftungsbohrung (84) am Umfang der Schlauchmembran (80) im Gehäuse (82) vorgesehen ist.

17. Scheibenwischer nach einem der Ansprüche 15 oder 16, **dadurch gekennzeichnet, dass** sich die Schlauchmembran (80) nach einem vorgegebenen Öffnungshub an einer Wand des Gehäuses (82) abstützt.

18. Scheibenwischer nach einem der Ansprüche 15 bis 17, **dadurch gekennzeichnet, dass** sich der Außendurchmesser des Düsenkörpers (86) im Bereich zwischen den Ringnuten (96, 98) verkleinert.

19. Scheibenwischer nach einem der Ansprüche 15 bis 18, **dadurch gekennzeichnet, dass** der Außendurchmesser des Düsenkörpers (86) sich zur Wasserleitung (18) hin konisch verjüngt.

20. Scheibenwischer nach einem der vorhergehenden Ansprüche, **dadurch gekennzeichnet, dass** durch die Wasserleitung (18) und den Wasserkanal (20) eine Heizleitung (116) führt.

## Claims

1. Windscreen wiper having a wiper arm, which is driven via a drive shaft and to which a wiper blade is coupled, at least one spray nozzle (10), which is composed of a plurality of parts, being arranged on a pivotable part (14) and the housing (16, 82) of which spray nozzle, or a nozzle body (12, 86) connected thereto, has a continuous water duct (20), from which a connecting duct (22) branches off to a spray duct (24, 58, 60), which is approximately parallel to the water duct (20) and has a nozzle opening (26), and which connecting duct is connected releasably to a water pump (118) via a water line (18), **characterized in that** a connecting piece (100) to a continuing water line (122) or a closure cap (110) is provided at that end (38) of the water duct (20) which faces away from the water line (18).

2. Windscreen wiper according to the precharacterizing clause of Claim 1, the housing (16) being held in an opening (34) of the pivotable part (14), which serves as retaining element, and the outer part (44) of the nozzle body (12) having a nozzle opening (26) and covering the opening (34) of the retaining element (14), **characterized in that** the nozzle body (12) has a connecting branch (30), which surrounds the connecting duct (22) and with which the nozzle body engages via a plug-in connection in an opening (36) of the housing (16).

3. Windscreen wiper according to Claim 1 or 2, **characterized in that** the housing (16, 82) and/or the nozzle body (12, 86) is made from plastic and the nozzle body (12, 86) is clipped into the housing (16, 82).

4. Windscreen wiper according to Claim 1, **characterized in that** the connecting piece (100) is cramped.

5. Windscreen wiper according to one of the preceding claims, **characterized in that** the nozzle body (12, 82) protrudes together with the mouth (28) of the spray duct (24, 58, 60) out of an opening (34) of the retaining element (14) in such a manner that the inner wall of the spray duct (24, 58, 60) or of the nozzle opening (26), which inner wall faces the retaining element (14), ends flush with the outer wall (46) of the retaining element (14).

6. Windscreen wiper according to one of the preceding claims, **characterized in that** the nozzle openings (26) are arranged in the upper region (50) of the retaining element (14).

7. Windscreen wiper according to one of the preceding claims, **characterized in that** a plurality of nozzle openings (26) are arranged vertically one above another.

8. Windscreen wiper according to Claim 7, **characterized in that** the retaining element (14) has a U-shaped cross-sectional profile and the opening (34) extends over part of a limb (52) and of a covering wall (54).

9. Windscreen wiper according to one of the preceding claims, **characterized in that** a ball (48) is pressed together with the nozzle opening (26) into a ball seat (56) of the spray duct (58).

10. Windscreen wiper according to one of the preceding claims, **characterized in that** the mouth of the spray duct (60) is formed by a connecting branch (62), which is integrally formed on the nozzle body (86) and onto which a nozzle cap (64) having a nozzle opening (26) is placed.

11. Windscreen wiper according to Claim 10, **characterized in that** the nozzle cap (66) consists of plastic and is clipped onto a ball seat (78) of the connecting branch (74).

12. Windscreen wiper according to either of Claims 10 and 11, **characterized in that** the nozzle opening (26) is arranged in the region of the outer inner wall (68) of the mouth of the spray duct (60).

13. Windscreen wiper according to Claim 12, **characterized in that** the nozzle cap (64, 66), on the side facing the nozzle body (12), engages in the widened spray duct (60) by means of a guiding element (70, 72), which tapers towards the nozzle opening (26).

14. Windscreen wiper according to one of the preceding claims, **characterized in that** the connecting duct (22) and the spray duct (24, 58, 60) open into an annular space (124) on the circumference of the nozzle body (86) and their mouth openings (88, 90) are covered by a membrane (80).

15. Windscreen wiper according to Claim 14, **characterized in that** the membrane is a rubber-elastic tubular membrane (80) and at its end has beads (92, 94) which are embedded in annular grooves (96, 98) of the nozzle body (86).

16. Windscreen wiper according to either of Claims 14 and 15, **characterized in that** a vent hole (84) is provided in the housing (82) on the circumference of the tubular membrane (80).

17. Windscreen wiper according to either of Claims 15 and 16, **characterized in that** the tubular membrane (80) is supported after a predetermined opening stroke on a wall of the housing (82).

18. Windscreen wiper according to one of Claims 15 to 17, **characterized in that** the outside diameter of the nozzle body (86) is reduced in size in the region between the annular grooves (96, 98).

19. Windscreen wiper according to one of Claims 15 to 18, **characterized in that** the outside diameter of the nozzle body (86) tapers conically towards the water line (18).

20. Windscreen wiper according to one of the preceding claims, **characterized in that** a heating line (116) leads through the water line (18) and the water duct (20).

## Revendications

1. Essuie-glace possédant un bras d'essuie-glace entraîné par un arbre d'entraînement et sur lequel est articulé un balai d'essuie-glace, dont une partie pivotante (14) comporte au moins une buse de pulvérisation composée de plusieurs parties, dont le boîtier (16, 82) ou un corps de buse (12, 86) relié à ce boîtier présente un canal d'eau traversant (20) d'où dérive un canal de liaison (22) menant à un canal de pulvérisation (24, 58, 60) à peu près parallèle au canal d'eau (20) et muni d'une ouverture de buse (26), le canal traversant étant relié de façon amovible à une pompe à eau (118) par l'intermédiaire d'une conduite d'eau (18),
**caractérisé en ce qu'**
à l'extrémité (38) du canal d'eau (20) éloignée de la conduite d'eau (18), est prévu, soit un raccord (100) menant à une conduite d'eau (122) qui mène plus loin, soit un capuchon de fermeture (110).

2. Essuie-glace selon le préambule de la revendication 1, dans lequel le boîtier (16) est tenu dans une ouverture (34) de la partie pivotante (14) qui sert d'élément porteur, et la partie extérieure (44) du corps de buse (12) présente une ouverture de buse (26) et recouvre l'ouverture (34) de l'élément porteur (14),
**caractérisé en ce que**
le corps de buse (12) présente une tubulure (30) qui entoure le conduit de liaison (22) et par laquelle il est engagé dans une ouverture (36) du boîtier (16) par une liaison à emmanchement.

3. Essuie-glace selon la revendication 1 ou 2,
**caractérisé en ce que**
le boîtier (16, 82) et/ou le corps de buse (12, 86) est ou sont en matière plastique et le corps de buse (12, 86) est encliqueté dans le boîtier (16, 82).

4. Essuie-glace selon la revendication 1,
**caractérisé en ce que**
le raccord (100) est contre-coudé.

5. Essuie-glace selon une des revendications précédentes,
**caractérisé en ce que**
le corps de buse (12, 82) déborde par l'embouchure (28) du canal de pulvérisation (24, 58, 60) en dehors d'une ouverture (34) de l'élément porteur (14) de telle manière que la paroi intérieure du canal de pulvérisation (24, 58, 60) ou de l'ouverture de buse (26), qui est dirigée vers l'élément porteur (14), se termine à l'affleurement de la paroi extérieure (46) de l'élément porteur (14).

6. Essuie-glace selon une des revendications précédentes,
**caractérisé en ce que**
les ouvertures de buses (26) sont disposées dans la région supérieure (50) de l'élément porteur (14).

7. Essuie-glace selon une des revendications précédentes,
**caractérisé en ce que**
plusieurs ouvertures de buses (26) sont disposées à la verticale l'une au-dessus de l'autre.

8. Essuie-glace selon la revendication 7,
**caractérisé en ce que**
l'élément porteur (14) présente un profil de section en forme de U et l'ouverture (34) s'étend sur une partie d'une branche (52) et d'une paroi de plafond (54).

9. Essuie-glace selon une des revendications précédentes,
**caractérisé en ce que**
une sphère (48) munie de l'ouverture de buse (26) est emmanchée à force dans un logement sphérique (56) du canal de pulvérisation (58).

10. Essuie-glace selon une des revendications précédentes,
**caractérisé en ce que**
le débouché du canal de pulvérisation (60) est formé par une tubulure (62) formée sur le corps de buse (86) et sur laquelle est emboîté un capuchon de buse (64) muni d'une ouverture de buse (26).

11. Essuie-glace selon la revendication 10,
**caractérisé en ce que**
le capuchon de buse (66) est en matière plastique et est encliqueté sur un siège sphérique (78) de la tubulure (74).

12. Essuie-glace selon une des revendications 10 ou 11,
**caractérisé en ce que**
l'ouverture de buse (26) est prévue dans la région de la paroi interne extérieure (68) du débouché du canal de pulvérisation (60).

13. Essuie-glace selon la revendication 13,
**caractérisé en ce que**,
sur le côté dirigé vers le corps de buse (12), le capuchon de buse (64, 66) est engagé dans le canal de pulvérisation élargi (60) par un corps de guidage (70, 72) qui mène à l'ouverture de buse (26).

14. Essuie-glace selon une des revendications précédentes,
**caractérisé en ce que**
le canal de liaison (22) et le canal de pulvérisation (24, 58, 60) débouchent dans un espace annulaire (124) situé à la périphérie du corps de buse (86) et leurs ouvertures de débouché (88, 90) sont recouvertes d'une membrane (80).

15. Essuie-glace selon la revendication 14,
**caractérisé en ce que**
la membrane est une membrane tubulaire (80) élastique à la façon du caoutchouc et elle présente à ses extrémités des bourrelets (92, 94) qui sont emboîtés dans des gorges annulaires (96, 98) du corps de buse (86).

16. Essuie-glace selon une des revendications 14 ou 15,
**caractérisé en ce qu'**
un perçage de purge d'air (84) est prévu dans le boîtier (82) à la périphérie de la membrane tubulaire (80).

17. Essuie-glace selon une des revendications 15 ou 16,
**caractérisé en ce qu'**
après une course d'ouverture prédéterminée, la membrane tubulaire (80) s'appuie contre une paroi du boîtier (82).

18. Essuie-glace selon une des revendications 15 à 17,
**caractérisé en ce que**
le diamètre extérieur du corps de buse (86) se réduit dans la région comprise entre les gorges annulaires (96, 98).

19. Essuie-glace selon une des revendications 15 à 18,
**caractérisé en ce que**
le diamètre extérieur du corps de buse (86) décroît avec une forme conique en direction de la conduite d'eau (18).

20. Essuie-glace selon une des revendications 15 à 17,
**caractérisé en ce qu'**
une ligne chauffante (116) passe dans la conduite d'eau (18) et le canal d'eau (20).
